# EUROPEAN PATENT APPLICATION

(11) **EP 1 442 988 A1**
(43) Date of publication of application: **04.08.2004**
(21) Application number: 02027782.8
(22) Date of filing: 11.12.2002
(51) Int. Cl.: B65D 8/04

(54) **Bamboo basket**

(71) Applicant: Wang, Wen-Tsan, Taipei City (TW)
(72) Inventor: Wang, Wen-Tsan, Taipei City (TW)
(74) Representative: Ruschke, Hans Edvard, Dipl.-Ing.

(57) **Abstract**

In a bamboo basket, each side panel is formed of a plurality of longitudinal bamboo slats (11) arranged in parallel, a plurality of transverse bamboo slats (5) attached to the longitudinal bamboo slats (11) at a back side, and a plurality of long, thin, narrow bamboo strips (6) wound crossed over the longitudinal bamboo slats (11) and transversely extended across the transverse bamboo slats (5) to tie the transverse bamboo slats (5) to the longitudinal bamboo slats (11).

## Description

### BACKGROUND OF THE INVENTION

### 1. Field of the Invention:

The present invention relates to bamboo baskets and, more particularly, to a side panel design for a bamboo basket.

### 2. Description of the Related Art:

Conventional baskets may be made of different materials such as ceramics, glass, wood, plastics, stainless steel, etc. In order to attract consumers to buy, the outer appearance design of a basket is important. A wooden or bamboo basket is a great favorite of consumers for the advantage of its ancient-style beauty. A regular bamboo basket is generally comprised of a framework and a woven structure. The wooden structure has open spaces in it. The woven structure may be adhered to the framework, or tied to the framework by strings. A woven structure adhered to a framework is less strong, and tends to be forced away from the framework. However, tying a woven structure to a framework with strings consumes much labor, resulting in high cost.

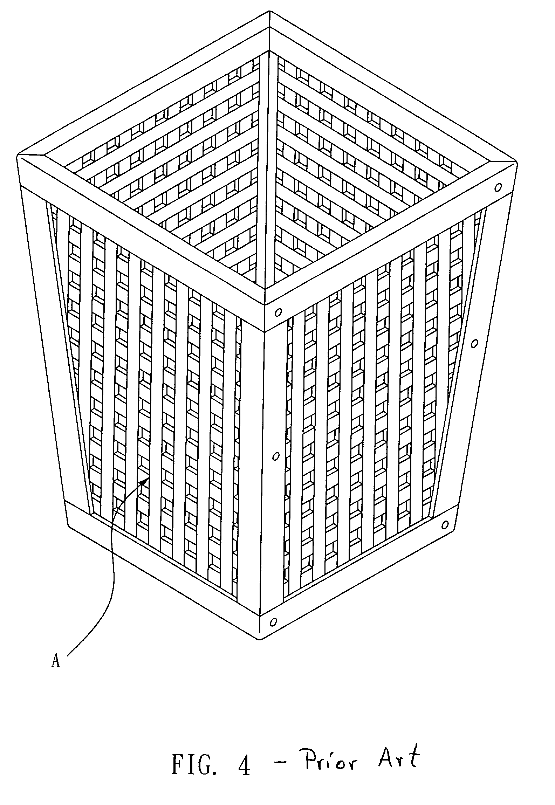

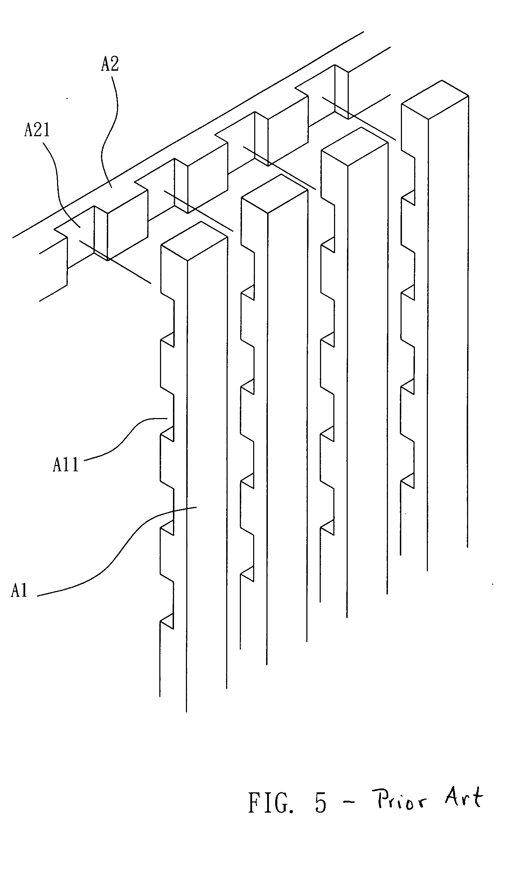

FIGS. 4 and 5 show a bamboo basket constructed according to the prior art. According to this design, the woven structure **A** is comprised of a plurality of longitudinal bamboo slats **A1** and a plurality of transverse bamboo slats **A2**. The longitudinal bamboo slats **A1** has a plurality of coupling notches **A11.** The longitudinal bamboo slats **A2** has a plurality of coupling notches **A21** respectively coupled to the coupling notches **A11** of the longitudinal bamboo slats **A1**. Processing the coupling notches **A11** and **A21** greatly increases the manufacturing cost of the bamboo basket.

There is known another design of bamboo basket in which the woven structure is formed by weaving bamboo strips subject to a predetermined woven pattern. having a plurality of protruded end mounting portions respectively fitted into respective mounting holes in the framework before covering of the top cover frame of the framework. This design of bamboo basket is also expensive to manufacture because it consumes much labor.

### SUMMARY OF THE INVENTION

The present invention has been accomplished under the circumstances in view. It is one object of the present invention to provide a bamboo basket, which is inexpensive to manufacture and durable in use. According to the present invention, the bamboo basket is comprised of a framework formed of a top open frame, a bottom panel, and a plurality of columns, and a plurality of side panels connected between the top open frame and the bottom panel and separated by the columns. Each. side panel is formed of a plurality of longitudinal bamboo slats arranged in parallel, a plurality of transverse bamboo slats attached to the longitudinal bamboo slats at a back side, and a plurality of long, thin, narrow bamboo strips wound crossed over the longitudinal bamboo slats and transversely extended across the transverse bamboo slats to tie the transverse bamboo slats to the longitudinal bamboo slats.

### BRIEF DESCRIPTION OF THE DRAWINGS

FIG. 1 is an elevational view of a bamboo basket constructed according to the present invention.

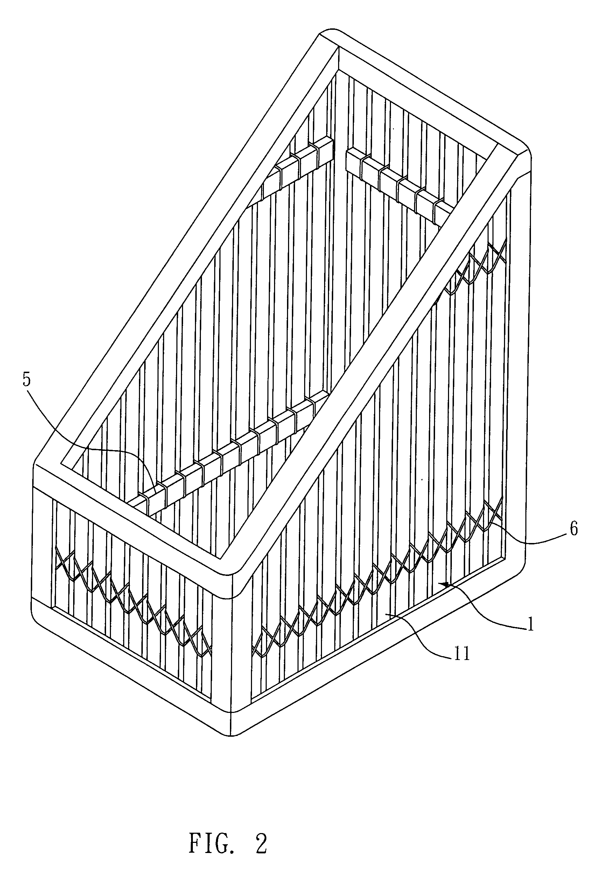

FIG. 2 is an elevational view of another bamboo basket constructed according to the present invention.

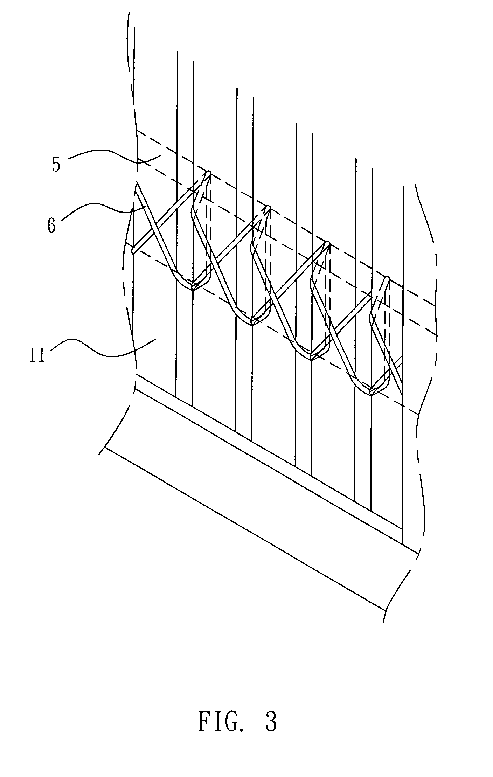

FIG. 3 is an elevational view of a part of the present invention, showing the bamboo strips crossed over the longitudinal bamboo slats.
FIG. 4 is an elevational view of a bamboo basket constructed according to the prior art.
FIG. 5 is an exploded view in an enlarged scale of a part of one side panel of the bamboo basket shown in FIG. 4.

### DETAILED DESCRIPTION OF THE PREFERRED EMBODIMENT

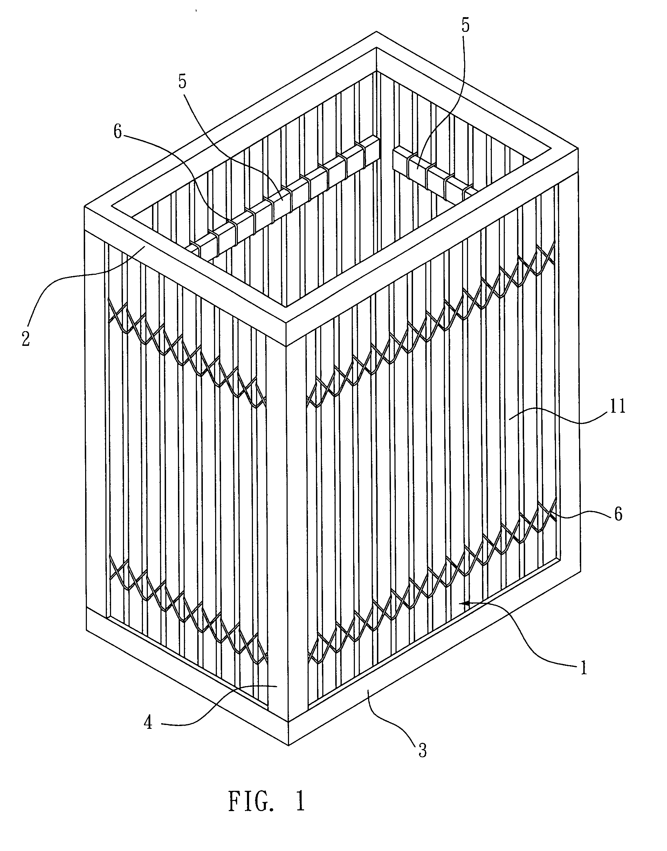

Referring to FIGS. 1∼3, a bamboo basket is shown comprising four side panels **1**, a top open frame **2**, a bottom panel **3**, and four columns **4**. The top open frame **2** and the bottom panel **3** are horizontally arranged in parallel at different elevations. The four side panels **1** are vertically connected between the top open frame **2** and the bottom panel **2** in four sides. The four columns **4** are vertically connected between the top open frame **2** and the bottom panel **2** in four corners between each two adjacent side panels **1**.

The top open frame **2** according to this embodiment is a rectangular open frame. The side panels **1** are slotted panels formed of longitudinal bamboo slats **11** and transverse bamboo slats **5**. The longitudinal bamboo slats **11** are arranged in parallel. The transverse bamboo slats **5** are attached to the longitudinal bamboo strips **11** at the back side and secured thereto by long, thin, narrow bamboo strips **6**. The bamboo strips **6** are crossed over the longitudinal bamboo slats **11** and transversely extended across the transverse bamboo slats **5** to secure the transverse bamboo slats **5** to the longitudinal bamboo slats **11**, forming a plurality of crossed portions over the longitudinal bamboo slats **5**. When assembled, the crossed portions of the bamboo strips **6** show a tie pattern that causes a sense of beauty.

A prototype of bamboo basket has been constructed with the features of the annexed drawings of FIGS. 1∼3. The bamboo basket functions smoothly to provide all of the features discussed earlier.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A bamboo basket comprising a top open frame, a bottom panel, a plurality of side panels connected between said top open frame and said bottom panel. and a plurality of columns connected between said top open frame and said bottom panel and between each two adjacent side panels, wherein said side panels each are comprised of a plurality of longitudinal bamboo slats arranged in parallel, a plurality of transverse bamboo slats attached to said longitudinal bamboo slats at a back side, and a plurality of long, thin, narrow bamboo strips wound round said longitudinal bamboo slats and said transverse bamboo slats to tie said transverse bamboo slats to said longitudinal bamboo slats.

2. The bamboo basket as claimed in claim 1 wherein said bamboo strips are crossed over longitudinal bamboo slats and transversely extended over said transverse bamboo slats, forming a plurality of crossed portions over said longitudinal bamboo slats.
